**Europäisches Patentamt**

**European Patent Office**

**Office européen des brevets**

(19)

(11) Numéro de publication: **0 008 551**
**B1**

(12) **FASCICULE DE BREVET EUROPEEN**

(45) Date de publication du fascicule du brevet: **29.06.83**

(51) Int. Cl.³: **G 10 L 1/02, H 04 B 1/66**

(21) Numéro de dépôt: **79400551.2**

(22) Date de dépôt: **03.08.79**

(54) Discriminateur de parole et son utilisation.

(30) Priorité: **17.08.78 FR 7824012**

(43) Date de publication de la demande:
**05.03.80 Bulletin 80/5**

(45) Mention de la délivrance du brevet:
**29.06.83 Bulletin 83/26**

(84) Etats contractants désignés:
**DE GB IT NL**

(56) Documents cités:
**FR - A - 2 271 725
US - A - 3 126 449**

**ELECTRONICS AND COMMUNICATIONS IN
JAPAN, vol. 47, no. 3, mars 1964, Washington,
USA H. SUZUKI et al. "Vowel discrimination by
means of linear discriminant functions", pages
20—30
IEEE TRANSACTIONS ON COMPUTERS, vol.
C-20, no. 9, septembre 1971, New York, USA L.
C. W. POLS "Real-time recognition of spoken
words", pages 972—978.**

(73) Titulaire: **THOMSON-CSF
173, Boulevard Haussmann
F-75379 Paris Cedex 08 (FR)**

(72) Inventeur: **Ben Sadou, Jean-Claude
"THOMSON-CSF" - SCPI 173, bld Haussmann
F-75360 Paris Cedex 08 (FR)**
Inventeur: **Boyer, Maurice
"THOMSON-CSF" - SCPI 173, bld Haussmann
F-75360 Paris Cedex 08 (FR)**
Inventeur: **Schulcz, Francis
"THOMSON-CSF" - SCPI 173, bld Haussmann
F-75360 Paris Cedex 08 (FR)**

(74) Mandataire: **Courtellemont, Alain et al,
THOMSON-CSF SCPI 173, Bld Haussmann
F-75379 Paris Cedex 08 (FR)**

(56) Documents cités:
**TELECOMMUNICATIONS AND RADIO
ENGINEERING, avril 1965, Washington, USA V.
N. TETEREV: "A combinatorial method of
detecting speech signals in a background of
smooth noise", pages 70—72.**

Courier Press, Leamington Spa, England.

## Discriminateur de parole et son utilisation

La présente invention concerne un discriminateur de parole pour discerner la présence de signaux de parole dans un signal basse fréquence à analyser; elle concerne également les récepteurs et plus particulièrement les récepteurs B.L.U., comportant de tels discriminateurs.

Il est connu d'étudier la répartition sepctrale du signal à analyser à l'aide deux filtres passe-bande à bande étroite, centrés, par exemple, l'un sur 500 Hz et l'autre sur 2000 Hz; selon que l'amplitude du spectre à 500 Hz est supérieure ou inférieure à celle à 2000 Hz, le signal reçu est considéré comme de la parole ou comme du bruit. En effet l'amplitude du spectre des phonèmes est, en générale, plus grande dans le fréquences basses que dans les fréquences hautes alors que c'est le contraire pour les bruits blancs; mais, d'une part, ceci n'est pas toujours le cas pour les phonèmes et, d'autre part, certains bruits non monotones, en particulier parmi les parasites industriels, présentent une répartition spectrale à amplitude plus élevée dans les fréquences basses que dans les fréquences hautes. Des risques importants d'erreur existent donc.

Il est également connu d'étudier la répartition spectrale du signal à analyser à l'aide de trois filtres passe-bande, de bandes passantes respectives par exemple égales à 0—1000 Hz, 1000—2000 Hz et 2000—3000 Hz. En effet il a été constaté que les phonèmes ont, en général, le maximum de leur énergie dans la bande 0—1000 Hz et la plus grande partie du reste de leur énergie dans une au moins des bandes 1000—2000 Hz et 2000—3000 Hz; si et seulement si le filtre 0—1000 Hz fournit un signal supérieur à un certain seuil ainsi que l'un au moins des deux autres filtres, le signal à analyser est considéré comme étant de la parole. La pratique montre qu'un tel critère est assez grossier; en effet, lorsque le signal à analyser est entaché d'un bruit à large bande et que le rapport signal sur bruit n'est pas très élevé (ce qui peut être le cas dans une liaison radioélectrique), là encore des riques importants d'erreur existent.

La demande de brevet français 2 271 725 décrit un détecteur parole-bruit légèrement différent du détecteur indiqué ci-avant, en effet les filtres sont à bande plus étroite (dans l'exemple: 400—500 Hz, 500—600 Hz et 1 350—1 550 Hz) et le critère de reconnaissance de parole est la présence d'un signal d'amplitude et de durée suffisante dans la bande de l'un au moins de ces filtres; les risques d'erreur sont encore supérieurs à ceux encourus avec le discriminateur précédent, dans le cas d'un bruit à large bande et d'un rapport signal sur bruit faible.

La présente invention se propose de réduire ces risques d'erreur.

Selon l'invention, un discriminateur parole-bruit comportant: n (n au moins égal à 3) moyens de filtrage, de détection et d'intégration centrés respectivement sur n fréquences $f_1$ à $f_n$ de la bande des signaux de parole, pour fournir des signaux d'amplitude $Af_i$ (où $i=1, 2 \ldots n$ et où $Af_i$ est une variable fonction du signal appliqué à l'entrée du discriminateur); et des moyens de comparaison couplés aux n circuit, pour fournir un signal de reconnaissance de phonème si les valeurs prises à un instant donné par $Af_1$ à $Af_n$ vérifient des critères prédéterminés, est principalement caractérisé en ce que, les signaux $Af_i$ étant des signaux analogiques et en ce que les moyens de comparaison comportent m comparateurs ayant chacun une première entrée pour recevoir le signal $Af_1$; m circuits de couplage, couplés respectivement aux m secondes entrées des m comparateurs, chaque circuit de couplage ayant k amplificateurs d'entrée (k entier au moins égal à 1 et pouvant être différent d'un circuit de couplage à l'autre) chaque amplificateur étant couplé pour recevoir l'un des signaux $Af_2$ à $Af_n$ et chaque circuit de couplage comportant, pour k supérieur à l, un additionneur de sortie à k entrées couplées respectivement à ses k amplificateurs; et un circuit combinatoire comportant un porte ET ayant p entrées (p au plus égal à m) couplées aux m comparateurs et dans le cas où p est inférieur à m au moins une porte OU pour coupler au moins deux des m comparateurs à une même entrée de la porte ET; et en ce que la sortie de la porte ET est couplée à la sortie du discriminateur.

Il est à noter qu'il est connu, par un article intitulé Vowel Discrimination By Means of Linear Discriminant Fuctions paru dans Electronics and Communications in Japan en mars 1964, de comparer deux à deux des signaux provenant de moyens de filtrage, de détection et d'intégration, pour distinguer les moyelles entre elles mais, à part le fait qu'il réalise des comparaisons entre les signaux obtenus, le discriminateur n'a rien à voir avec la présente invention étant conné, en particulier, qu'il concerne la détection de voyelles et non pas de parole et qu'il ne considère pas un sous-espace dont il s'agit de fixer les limites mais des points du sous-espace de la parole, points qu'il faut repérer.

La présente invention sera mieux comprise et d'autres charactéristiques apparaîtront à l'aide de la description ci-après et des figures s'y rapportant qui représentent:

— la figure 1 un diagramme relatif aux signaux de parole;
— la figure 2 un discriminateur de parole selon l'invention.

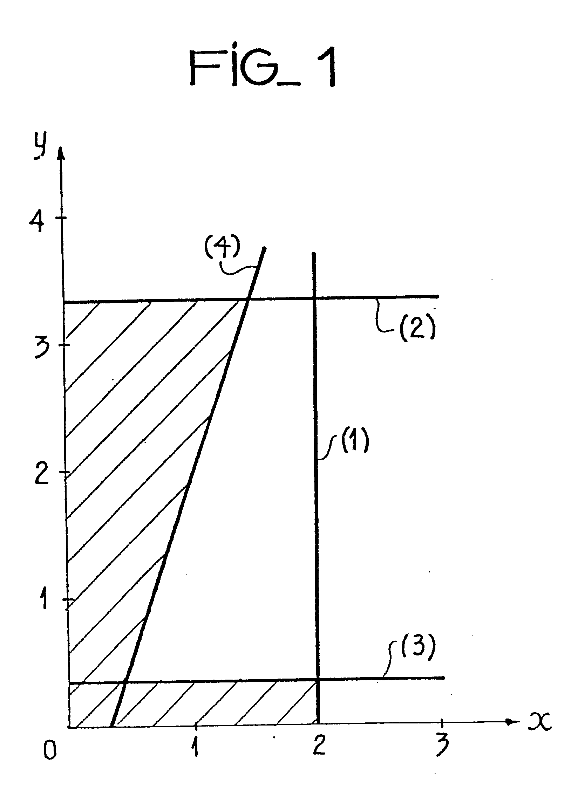

La figure 1 résulte d'une étude spectrale de signaux de parole et de signaux de bruit. Cette étude a été effectuée à l'aide de trous filtres à bande étroite. Les bandes passantes de ces filtres étaient respectivement centrées sur trois fréquences (500, 1000 et 2400 Hz) de la bande 300—3000 Hz des signaux de parole. Aux entrées de ces trois filtres étaient appliqués des signaux électriques donnés, correspondant soit à des phonèmes soit à des bruits; ces signaux dont l'origine était connue (parole ou bruit) avant leur application à l'entrée des filtres, correspondaient à des signaux de parole et de bruit tels qu'ils sont reconstitués sous leur forme basse fréquence par exemple dans les récepteurs radioélectriques.

A la sortie de chacun des trois filtres était branché un circuit de détection et d'intégration dont le signal de sortie était donc représentatif de l'amplitude moyenne du signal de sortie du filtre correspondant. Un dispositif de mesure délivrait, pour un signal d'entrée donné, les valeurs représentatives respectivement de l'amplitude moyenne de ce signal dans les bandes passantes des trois filtres: A dans la bande passante centrée sur 500 Hz, B dans la bande passante centrée sur 1000 Hz et C dans la bande passante centrée sur 2400 Hz.

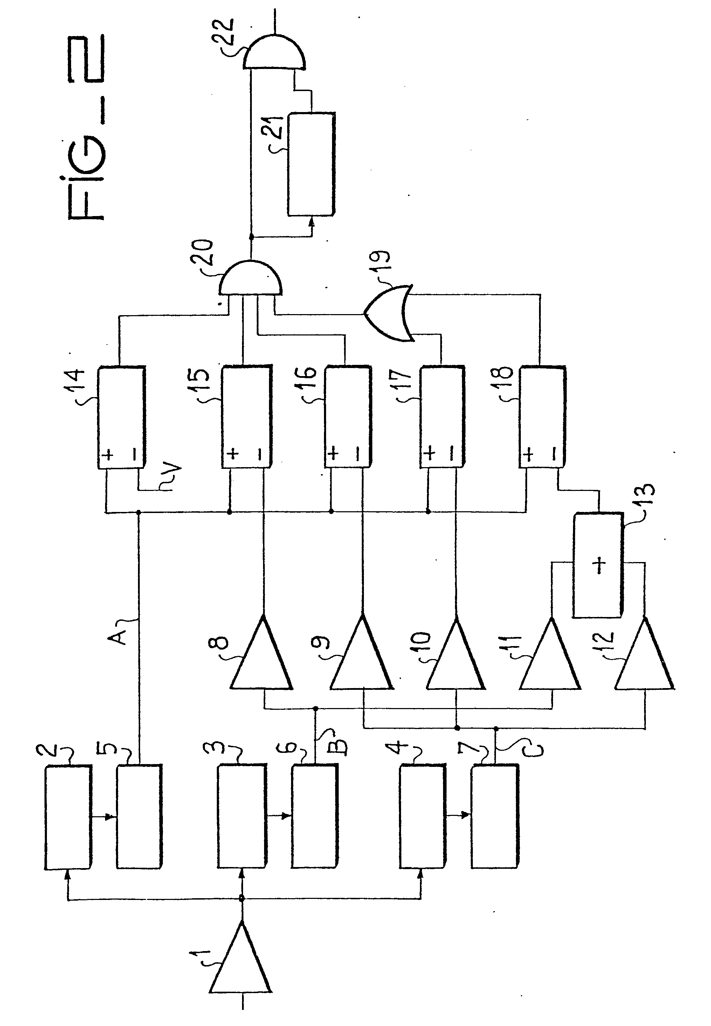

Ce dispositif d'études spectrale se retrouve (au dispositif de mesure près) dans le discriminateur de parole selon la figure 2 qui sera vu plus loin: ce sont les filtres 2, 3 et 4 et les circuits de détection et d'intégration 5, 6 et 7.

Plusieurs dizaines de phonèmes et de signaux de bruit ont été ainsi analysés. Dans un plan comportant deux axes de coordonnées rectangulaires ox et oy, ont été repérés les points de coordonnées x=B/A et y=C/A (A, B et C étant, comme indiqué plus haut, les valeurs fournies par le dispositif de mesure pour un signal donné).

La répartition des points dans le plan ox, oy est telle que les points correspondant à des phonèmes se trouvent sensiblement tous dans la zone hachurée représentée sur la figure 1 c'est-à-dire dont les coordonnées doivent vérifier les conditions

$$1-0,5 \ x>0 \qquad (1)$$

$$1-0,3 \ y>0 \qquad (2)$$

et au moins l'une des deux conditions

$$1-2,85 \ y>0 \qquad (3)$$

$$1-3 \ x+1,05 \ y>0 \qquad (4)$$

tandis que les points correspondant à des signaux de bruit se trouvent sensiblement tous hors de cette zone.

Sur la figure 1 les droites 1—0,5 x=0, 1—0,3 y=0, 1—2,85 y=0 et 1—3 x+1,05 y=0 ont été respectivement repérées par les symboles (1) (2) (3) et (4).

La figure 2 est le schéma d'un discriminateur de parole réalisé pour déterminer si, étant donné un signal, son point (x, y), défini comme indiqué ci-avant, se trouve ou ne se trouve pas dans la zone hachurée de la figure 1; dans le premier cas le signal sera considère comme étant de la parole et dans le second cas comme étant du bruit.

Le signal à analyser est appliqué à l'entrée d'un amplificateur à gain réglable 1. Le signal de sortie de l'amplificateur 1 est envoyé sur les entrées de trois filtres à bande passange étroite:

— filtre 2 de bande passante 500 Hz±100 Hz avec une pente de 12 dB par octave,
— filtre 3 de bande passante 1000 Hz±100 Hz avec une pente de 24 dB par octave,
— filtre 4 de bande passante 2400 Hz±100 Hz avec une pente de 12 dB par octave.

Les signaux de sortie des filtres 2, 3, 4 sont respectivement appliqués aux entrées de trois circuits de détection et d'intégration 5, 6, 7 qui donnent comme signaux de sortie des signaux A, B et C dont l'amplitude, qui sera notée respectivement A, B, C dans ce qui suit, correspond à l'amplitude moyenne, dans les bandes 500 Hz±100 Hz, 1000 Hz±100 Hz, et 2400 Hz±100 Hz, du signal de sortie de l'amplificateur 1.

Le signal A est envoyé sur l'entrée "+" de cinq comparateurs de niveau, 14 à 18, qui fournissent un signal de sortie de niveau positif donné tant que le niveau du signal sur leur entrée "+" est supérieur au niveau du signal sur leur entrée "—" et qui ne fournissent aucun signal (niveau zéro) si ce n'est pas le cas.

Le signal B est envoyé, à travers un amplificateur B, de gain +0,5, sur l'entrée "—" du comparateur 15 qui ne fournit donc un signal de sortei que lorsque l'inégalité ci-dessous est vérifiée:

$$A>0,5 \ B$$

soit $\qquad A-0,5 \ B>0$

soit $\qquad 1-0,5 \ \dfrac{B}{A}>0$

soit $\qquad 1-0,5 \ x>0$

c'est la condition (1), vue plus avant, de distinction de parole.

Le signal C est envoyé, à travers un amplificateur 9 de gain +0,3, sur l'entrée "—" du comparateur 16 qui ne fournit donc un signal de sortie que lorsque l'inégalité ci-après est vérifiée:

$$A>0,3 \ C$$

soit $\qquad A-0,3 \ C>0$

soit $\qquad 1-0,3 \ \dfrac{C}{A}>0$

soit $\qquad 1-0,3 \ y>0$

c'est la condition (2), vue plus avant, de distinction de parole.

La vérification que l'une au moins des conditions (3) et (4) est remplie est effectuée comme indiqué ci-après.

Un amplificateur 10, de gain +2,85, reçoit le signal C, un amplificateur 11 de gain +3, reçoit le signal B est un amplificateur 12 de gain —1,05, reçoit le signal C. Le signal de sortie de l'amplificateur 10 est appliqué à l'entrée "—" du comparateur 17 et les signaux de sortie de amplificateurs 11 et 12 sont additionnés dans un additionneur analogique 13 dont la sortie est reliée à l'entrée "—" du comparateur 18.

Le comparateur 17 ne fournit donc un signal de sortie que lorsque l'inégalité ci-après est vérifiée:

$$A > 2,85\ C$$

soit $\quad A—2,85\ C > 0$

soit $\quad 1—2,85\ \dfrac{C}{A} > 0$

soit $\quad 1—2,85\ y > 0$

c'est la condition (3), vue plus avant, de distinction de parole.

Le comparateur 18, étant donné les signaux qu'il reçoit, ne fournit un signal de sortie que lorsque l'inégalité ci-après est vérifiée

$$A > 3\ B—1,05\ C$$

soit $\quad A—3\ B+1,05\ C > 0$

soit $\quad 1—3\ \dfrac{B}{A} +1,05\ \dfrac{C}{A} > 0$

soit $\quad 1—3\ x+1,05\ y > 0$

c'est la condition (4), vue plus avant, de distinction de parole.

Un porte OU, 19, branchée sur les sorties des comparateurs 17 et 18, délivre un signal de niveau "1" logique (logique positive dans le cas du discriminateur décrit) quand au moins un de ses signaux d'entrée est de niveau positif, et un signal de niveau logique "0" quand ses deux signaux d'entrée ont le niveau zéro. Ainsi la port OU 19 fournit un signal de niveau "1" seulement lorsque au moins une des deux conditions

$$1—2,85\ y > 0$$

$$1—3\ x+1,05\ y > 0$$

est remplie.

Le comparateur 14 reçoit sur son entrée "—" une tension de référence V et ne délivre un signal de sortie que lorsque le niveau du signal A est supérieur à V. Le niveau du signal V est choisi de sorte que le comparateur 14 ne délivre un signal de sortie que lorsque le niveau du signal à l'entrée de l'amplificateur 1 (du moins dans la bande 500 Hz±100 Hz) est suffisamment élevé pour se distinguer d'un simple bruit de fond.

Une porte ET, 20, à quatre entrées respectivement reliées aux sorties des comparateurs 14, 15, 16 et à la sortie de la porte OU, 19, délivre un signal de niveau "1" logique quand tous ses signuax d'entrée sont de niveau positif, et un signal de niveau "0" logique si ce n'est pas le cas. Ainsi la porte ET 20 fournit un signal de niveau "1" seulement lorsque le niveau du signal à l'entrée de l'amplificateur 1 est considéré comme suffisant et que les deux conditions

$$1—0,5\ x > 0 \qquad (1)$$

$$1—0,3\ y > 0 \qquad (2)$$

ainsi que l'une au moins des conditions

$$1—2,85\ y > 0 \qquad (3)$$

$$1—3\ x+1,05\ y > 0 \qquad (4)$$

sont remplies.

Le discriminateur de parole selon la figure 2 comporte également un ensemble de traitement du signal délivré par la porte ET 20. Cet ensemble est constitué par un circuit à retard, 21, de 30 ms de temps de retard et une porte ET 22 à deux entrées dont l'une reçoit le signal de sortie de la porte ET 20 directement et l'autre à travers le circuit à retard 21. Ainsi la porte ET 22 ne délivre un signal de sortie que si le signal de sortie de la porte ET 20 a une durée supérieure à 30 ms, ceci permet de supprimer les décisions très courtes (niveau "1" de durée au plus égale à 30 ms à la sortie de la porte ET 20) étant donné que ces decisions très courtes correspondent, en général à des passages intempestifs de bruit.

L'invention n'est pas limitée à l'exemple décrit c'est ainsi que le nombre de points de mesure de l'amplitude spectrale dans la bande des signaux de parole peut être supérieur à trois, ce qui donne n variables (n supérieur à 3). Une étude préalable de phonèmes et de signaux de bruit conduit alors à formuler des conditions entre ces variables pour discriminer entre les signaux de parole et de bruit. Un normalisation par rapport à l'une des variables ou par rapport à une combinaison de variables permet de ramener à un espace à n—1 dimensions avec n—1 variables indépendantes du niveau du signal à analyser; dans le cas de l'exemple décrit où n était égal à 3 les trois variables A, B, C avaient été réduites à deux x, y (figure 1) par normalisation par rapport à la variable A.

La présente invention trouve un domaine d'application dans les récepteurs radioélectriques et tout particulièrement dans les récepteurs B.L.U. où, à partir du signal HF reçu, est reconstitué, sous sa forme basse-fréquence, un signal de parole auquel est mélangé du bruit.

**Revendications**

1. Discriminateur parole-bruit comportant n (n au moins égal à 3) moyens de filtrages, de détection et d'intégration (2—7) centrés respectivement sur n fréquences $f_1$ à $f_n$ de la bande des signaux de parole, pour fournir des signaux d'amplitude $Af_i$ (où i=1, 2 ... n et où $Af_i$ est une variable fonction du signal appliqué à l'entrée du discriminateur); et des moyens de comparaison (8—13, 15—20) couplés aux n moyens de filtrage, pour fournir un signal de reconnaissance de phonème si les valeurs prises à un instant donné par $Af_1$ à $Af_n$ vérifient des critères prédéterminés, caractérisé en ce que les signauz $Af_i$ sont des signaux analogiques et en ce que les moyens de comparaison comportent: m comparateurs (15—18) ayant chacun une première entrée (+) pour recevoir le signal $Af_1$; m circuits de couplage (8, 9, 10, 11—12—13), couplés respectivement aux m secondes entrées (—) des m comparateurs chaque circuit de couplage ayant k amplificateurs d'entrée (k entier au moins égal à 1 et pouvant être différent d'un circuit de couplage à l'autre), chaque amplificateur étant couplé pour recevoir l'un des signaux $Af_2$ à $Af_n$ et chaque circuit de couplage, comportant pour k supérieur à 1, un additionneur de sortie à k entrées couplées respectivement à ses k amplificateurs; et un circuit combinatoire comportant une porte ET (20) ayant p entrées (p au plus égal à m) couplées aux m comparateurs et dans le cas où p est inférieur à m au moins une porte OU (19) pour coupler au moins deux des m comparateurs (17, 18) à une même entrée de la porte ET; et en ce que la sortie de la porte ET est couplée à la sortie du discriminateur.

2. Discriminateur parole-bruit selon la revendication 1, caractérisé en ce que n=3, en ce que $f_1$=500 Hz, $f_2$=1000 Hz et $f_2$=2400 Hz, en ce que m=4, les circuits de couplage de la seconde entrée du premier (15), du deuxième (16), du troisième (17), du quatrième (18) des quatre comparateurs comportant respectivement

— un amplificateur (8) de gain +0,5 pour recevoir le signal $Af_2$,
— un amplificateur (9) de gain +0,3 pour recevoir le signal $Af_3$,
— un amplificateur (10) de gain +2,85 pour recevoir le signal $Af_3$,
— un amplificateur (11) de gain +3 pour recevoir le signal $Af_2$, un amplificateur (12) de gain —1,05 pour recevoir le signal $Af_3$ et un additionneur (13) à deux entrées couplées respectivement aux amplificateurs de gain +3 et —1,05,

et en ce que la porte ET comporte trois entrées couplées aux 4 comparateurs, la première et la deuxième de ces entrées étant couplées au premier et au deuxième comparateur, une porte OU à deux entrées couplant les troisième et quatrième comparateurs à la troisième de ces trois entrées.

3. Discriminateur parole-bruit selon l'une des revendications précédentes, caractérisé en ce qu'il comporte un dispositif de blocage (14) couplé à l'entrée du discriminateur, pour contrôler l'amplitude du signal à analyser et interdire la délivrance du signal de reconnaissance de phonème si cette amplitude est inférieure à un niveau prédéterminé.

4. Discriminateur parole-bruit selon l'une des revendications précédentes, caractérisé en ce qu'il comporte un circuit de suppression (21, 22) couplé à la sortie des moyens de comparaison pour interdire la délivrance du signal de reconnaissance de phonéme lorsque sa durée est inférieure à une durée donnée.

5. Utilisation d'un discriminateur parole-bruit dans un récepteur B.L.U., caractérisée en ce que le discriminateur est un discriminateur selon l'une des revendications précèdentes.

**Patentansprüche**

1. Sprache-Geräusch Diskriminator, welcher n (n mindestens gleich 3) Filterungs-, Gleichrichtungs- und Integrations-Mittel (2—7) aufweist, die auf je n Frequenzen $f_1$ bis $f_n$ des Sprache-Signalbandes zentriert sind, zur Erzeugung von Amplitudensignalen $Af_i$ (wo i=1, 2 ... n und wo $Af_i$ eine vom am Eingang des Diskriminators eingebenen Signal abhängige Veränderliche ist); und welcher mit den n Filterungs mittel verbundene Vergleichsmittel (8—13, 15—20) aufweist, zur Erzeugung eines Phonem-Erkennungs-Signal, wenn dei von $Af_1$ bis $Af_n$ zu einem bestimmten Zeitpunkt angenommen Werte vorbestimmten Kriterien erfüllen, dadurch gekennzeichnet, dass die Signale $Af_i$ Analog-Signale sind und dass die Vergleichsmittel folgende Elemente aufweisen: m Komparatoren (15—18) mit je einen ersten Eingang (+) zum Empfang des Signals $Af_1$; m Schaltungs Stromkreise (8, 9, 10, 11—12—13), welche entsprechend mit den m zweiten Eingängen (—) der m Komparatoren verbunden sind, wobei jeder Schaltungskreis k Eingangsverstärker hat (wo k eine ganze Zahl mindestens gleich 1 ist und von einem Schaltungskreis zum anderen verschieden sein kann), wobei jeder Verstärker so verbunden ist, um eins der Signale $Af_2$ bis $Af_n$ zu empfangen und wobei jeder Schaltungskreis, für k grösser als 1, einen Ausgangsaddierer mit k mit seinen k Verstärkern je verbundene Eingänge; und eine Kombinatorisch-Kreis, welcher ein UND-Gatter (20) mit p Eingängen (p höchstens gleich m) aufweist, welche mit den m Komparatoren verbunden sind und welcher, falls p kleiner als m ist, mindestens ein ODER-Gatter (19) aufweist, um mindestens zwei der m Komparatoren (17, 18) mit mit einen selben Eingang des UND-Gatters zu verbinden; und dadurch dass der Ausgang des UND-Gatters mit dem Ausgang des Diskriminators verbunden ist.

2. Sprache-Geräusch Diskriminator nach Anspruch 1, dadurch gekennzeichnet, dass n=3, dass $f_1$=500 Hz, $f_2$=1000 Hz und $f_3$=2400 Hz, und dass m=4, wobei die Schaltingskreise des zweiten Eingangs des ersten (15), des zweiten (16), des dritten (17), des vierten (18) die vier Komparatoren jeweils aufweisen:

— einen Verstärker (8) mit einen Verstärkungsfaktor von +0,5 zum Empfang des Signals $Af_2$,
— einen Verstärker (9) mit einem Faktor von +0,3 zum Empfang des Signals $Af_3$,
— einen Verstärker (10) mit einem Faktor von +2,85 zum Empfang des Signals $Af_3$,
— einen Verstärker (11) mit einem Faktor von +3 zum Empfang des Signals $Af_2$,
— einen Verstärker (12) mit einem Faktor von −1,05 zum Empfang des Signals $Af_3$ und
— einen Addierer (13) mit zwei Eingängen, welche jeweils mit den Verstärkern mit den Faktoren +3 und −1,05 verbunden sind,

und dadurch, dass das UND-Gatter drei mit den 4 Komparatoren verbundenen Eingänge mit dem ersten und zweiten Komparator verbunden ist, und wobei ein ODER-Gatter mit zwei Eingängen die dritten und vierten Komparatoren mit dem dritten dieser drei Eingänge verbindet.

3. Sprache-Geräusch Diskriminator nach den vorherigen Ansprüchen, dadurch gekennzeichnet, dass er eine mit dem Eingang des Diskriminators verbundene Blockierungs-Vorrichtung (14) aufweist, zum Prüfen des zu analysieren Signals und zum Verhindern der Ausgabe des Phonem-Erkennungs-Signals, wenn diese Amplitude geringer als ein vorbestimmter Pegel ist.

4. Sprache-Geräusch Diskriminator nach den vorherigen Ansprüchen, dadurch gekennzeichnet, dass er einen mit den Ausgängen der Vergleichsmittel verbundenen Unterdrückungs-Kreis (21—22) aufweist, zum Verhindern der Ausgabe des Phonem-Erkennungs-Signals, ihre Dauer geringer als eine vorbestimmte Dauer ist.

5. Anwendung eines Sprache-Geräusch Diskriminators in einem Ein-Seiten-Band Empfängers, dadurch gekennzeichnet, dass der Diskriminator ein Diskriminator nach den vorherigen Ansprüchen ist.

**Claims**

1. A speech/noise discriminator comprising n (where n equals at least 3) filtering, detection and integration devices (2—7), centred respectively on n frequencies $f_1$ to $f_n$, in the speech signal band, to supply signals of amplitude $Af_1$ (where i=1, 2 ... n, and $Af_1$ is a variable function of the signal at the discriminator input), and means of comparison (8—13, 15—20), connected to the n filtration devices, to supply a phoneme recognition signal if the values reached at a given moment by $Af_1$ to $Af_n$ comply with predetermined criteria, this discriminator being characterized by the fact that the signals $Af_i$ are analog signals, and by the fact that the means of comparison comprise n comparators (15—18), each possessing one input (+) to receive the signal $Af_1$, m connecting circuits (8, 9, 10, 11, 12, 13), connected respectively to the m second inputs (−) of the m comparators, each such connecting circuit possessing k input amplifiers (where k is a whole number equal to at least 1, and possibly varying from one connection circuit to the next), each such amplifier being connected to receive one of the signals $Af_2$ to $Af_n$, and each connecting circuit comprising, for k greater than 1, an output adder with k connected inputs connected respectively to its k amplifiers, and a combinatory circuit comprising an AND gate (20) with p inputs (where p is not more than m), connected to the m comparators and, where p is less than m, at least one OR gate (19), to connect at least two (17, 18) of the m comparators to the same AND gate input, and further characterized by the fact that the AND gate output is connected to the discriminator output.

2. A speech/noise discriminator as defined in Claim 1, characterized by the fact that n=3, that $f_1$=500 Hz, $f_2$=1000 Hz and $f_2$=2400 Hz, that m=4, the connecting circuits of the second input of the first (15), second (16), third (17) and fourth (18) of the four comparators comprising respectively:

a +0.5 gain amplifier (8) to receive the signal $Af_2$,
a +0.3 gain amplifier (9) to receive the signal $Af_3$,
a +2.85 gain amplifier (10) to receive the signal $Af_3$,
a +3 gain amplifier (11) to receive the signal $Af_2$, a −1.05 gain amplifier (12) to receive the signal $Af_3$, and an adder (13) with two inputs connected to the +3 and −1.05 gain amplifiers respectively,

and by the fact that the AND gate comprises three inputs connected to the 4 comparators, the first and second such inputs being connected to the first and second comparator, and an OR gate with two inputs connecting the third and fourth comparators to the third such input.

3. A speech/noise discriminator as defined in either of the preceding claims, characterized by the fact that it comprises a blocking device (14) connected to the discriminator input, to check the amplitude of the signal to be analysed and prevent delivery of the phoneme recognition signal if the amplitude is below a predetermined level.

4. A speech/noise discriminator as defined in any one or other of the preceding claims, characterized by the fact that it comprises a suppression circuit (21, 22), connected to the comparison means output, to prevent delivery of the phoneme recognition signal when it is shorter than a given duration.

5. Use of a speech/noise discriminator in a B.L.U. receiver, characterized by the fact that the said discriminator is a discriminator as defined in any one or other of the preceding claims.

# FIG_1

FIG_2